# EUROPEAN PATENT APPLICATION

(11) **EP 4 800 627 A1**
(43) Date of publication of application: **02.09.2026**
(21) Application number: 24900793.1
(22) Date of filing: 13.09.2024
(51) Int. Cl.: G06Q 20/32, G06Q 20/34, G06Q 20/38, G06Q 20/06, H04L 9/32, G06F 3/0484, G06Q 50/10

(54) **PORTABLE ELECTRONIC DEVICE FOR SUPPORTING TRANSACTION MADE IN NON-TERRESTRIAL REGION**

(30) Priority: 04.12.2023 KR 20230173633; 09.01.2024 KR 20240003373
(71) Applicant: Samsung Electronics Co., Ltd., Suwon-si, Gyeonggi-do 16677 (KR)
(72) Inventor: LEE, Yongwan, Suwon-si, Gyeonggi-do 16677 (KR); KIM, Namin, Suwon-si, Gyeonggi-do 16677 (KR); KIL, Miyeon, Suwon-si, Gyeonggi-do 16677 (KR); KIM, Naekyung, Suwon-si, Gyeonggi-do 16677 (KR); KIM, Minkyun, Suwon-si, Gyeonggi-do 16677 (KR); CHO, Jaeman, Suwon-si, Gyeonggi-do 16677 (KR); HONG, Jeongpyo, Suwon-si, Gyeonggi-do 16677 (KR)
(74) Representative: HGF
(86) International application number: PCT/KR2024/014008
(87) International publication number: WO 2025/121605

(57) **Abstract**

This portable electronic device can acquire travel information about a user, transmit, to a server, on the basis of the travel information, a first message including identification information of a card company that issued a card registered in the portable electronic device and information included in the travel information, receive a second message in relation to the first message, and acquire, on the basis of the second message, a token to be used for card payment while the user is on board a means of transportation traveling between countries.

## Description

### [Technical Field]

Embodiments of the disclosure relate to a portable electronic device for supporting a transaction performed in an area (e.g., the high seas) (hereinafter, a non-ground area) in which the boundary between countries is unclear.

### [Background Art]

A token is a substitute for an original that needs to be protected and may be used for a mobile payment service. For example, a portable electronic device (e.g., a smartphone) may store a token corresponding to a card (e.g., credit card) number for payment. The portable electronic device may perform a payment for accessing an online service or a product by using the stored token.

The token may include a universal token complying with a global standard (e.g., Europay, MasterCard, Visa (EMV)) and a dedicated token complying with a standard independently established in a specific country. When a user moves between countries, a token payment method may be changed. For example, when the user moves from a country where the user resides to another country, the portable electronic device may receive a country code (e.g., mobile country code (MCC)) of the corresponding country through a wireless communication circuit. The portable electronic device may change the token payment method from a payment method using a dedicated token to a payment method using a universal token, based on the received country code.

The above-described information is provided as related art for assisting in understanding the disclosure. None of the above-described content is claimed or determined to be prior art applicable to the disclosure.

### [Disclosure of Invention]

### [Technical Problem]

A card company may support both a dedicated token payment method and a universal token payment method. Fees may be determined differently according to the payment method. For example, in the case of payment using the dedicated token, there may be no charge, and in the case of payment using the universal token, a specified amount or an amount based on a payment amount may be determined as fees.

A transport apparatus (e.g., an aircraft, a cruise, or an urban air mobility (UAM)) may provide a mobile payment service using a token to passengers when moving in a non-ground area (e.g., the sky, the sea, or space). A company that operates the transport apparatus (i.e., a company that provides transportation services using transport apparatuses) may have an affiliation relationship (or a partnership) with a card company that supports a dedicated token of a specific country, with regard to a predetermined policy. For example, when a passenger purchases a service right or goods sold in the transport apparatus by using a card of the card company that has the affiliation relationship with the company operating the transport apparatus, a handling fee may be waived. As another example, a discount may be applied, or points (e.g., mileage) may be additionally accumulated.

Various embodiments may provide a portable electronic device that supports payment using a token in a transport apparatus moving in a non-ground area. Various embodiments may provide a portable electronic device that enables payment by using a dedicated token of a card, registered in the portable electronic device for payment, when a card company of the card has an affiliation relationship with an operator of the transport apparatus.

The technical problems to be solved in the disclosure are not limited to the technical problems mentioned above, and other technical problems not mentioned may be clearly understood by those skilled in the art from the following description.

### [Solution to Problem]

According to an embodiment, a portable electronic device may include a touch-sensitive display, a wireless communication circuit, a processor connected to the display and the wireless communication circuit, and a memory storing instructions executable by the processor. The instructions, when executed by the processor, may cause the portable electronic device to: identify travel information including identification information of a transport apparatus moving between countries through a non-ground area, from data received from an external device through the wireless communication circuit or from data stored in the memory; transmit an affiliation inquiry request message including identification information of a card company that issued a card registered in the portable electronic device and the identification information of the transport apparatus to a first external device through the wireless communication circuit, based on identifying the travel information from the data; receive an affiliation inquiry response message including affiliation information indicating whether an operating company of the transport apparatus and the card company are in an affiliation relationship from the first external device or a second external device different from the first external device through the wireless communication circuit, in response to transmission of the identification information of the card company and the identification information of the transport apparatus; and configure, among first and second tokens, the second token as an active token for payment, based on identifying that the operating company and the card company are in the affiliation relationship from the affiliation information.

According to an embodiment, a method of operating a portable electronic device may include: an operation of identifying travel information including identification information of a transport apparatus moving between countries through a non-ground area, from data received from an external device through a wireless communication circuit of the portable electronic device or from data stored in a memory of the portable electronic device; an operation of transmitting, to a first external device through the wireless communication circuit, an affiliation inquiry request message including identification information of a card company that issued a card registered in the portable electronic device and the identification information of the transport apparatus, based on identifying the travel information from the data; an operation of receiving an affiliation inquiry response message including affiliation information indicating whether an operating company of the transport apparatus and the card company are in an affiliation relationship from the first external device or from a second external device different from the first external device through the wireless communication circuit, in response to transmission of the identification information of the card company and the identification information of the transport apparatus; and an operation of configuring, among a first token and a second token, the second token as an active token for payment, based on identifying that the operating company and the card company are in the affiliation relationship from the affiliation information.

According to an embodiment, a portable electronic device may include a touch-sensitive display, a wireless communication circuit, a processor, and a memory storing instructions. The instructions, when executed by the processor, may cause the portable electronic device to: obtain travel information of a user of the portable electronic device; transmit, based on the travel information, a first message including identification information of a card company that issued a card registered in the portable electronic device and information included in the travel information to a server through the wireless communication circuit; receive a second message in relation to the first message, through the wireless communication circuit; determine whether the user is on board a transport apparatus moving between countries, based on at least one of the travel information and information related to a location of the portable electronic device identified through the wireless communication circuit; and obtain, based on the second message, a token to be used for card payment while the user is on board the transport apparatus.

According to an embodiment, a method of operating a portable electronic device may include: an operation of obtaining travel information of a user of the portable electronic device; an operation of transmitting, based on the travel information, a first message including identification information of a card company that issued a card registered in the portable electronic device and information included in the travel information to a server through a wireless communication circuit of the portable electronic device; an operation of receiving a second message in relation to the first message, through the wireless communication circuit; an operation of determining whether the user is on board a transport apparatus moving between countries, based on at least one of the travel information and information related to a location of the portable electronic device identified through the wireless communication circuit; and an operation of obtaining, based on the second message, a token to be used for card payment while the user is on board the transport apparatus.

### [Advantageous Effects of Invention]

According to embodiments of the disclosure, a portable electronic device may provide a mobile payment service using a token in a non-ground area. The portable electronic device may provide a mobile payment service using a dedicated token that is financially advantageous to a user when an operator of a transport apparatus and a card company are in an affiliate relationship. In addition, various effects identifiable directly or indirectly through the disclosure may be provided.

### [Brief Description of Drawings]

FIG. 1 is a block diagram of an electronic device in a network environment according to various embodiments.
FIG. 2 is a block diagram of a portable electronic device configured to support a transaction performed in a non-ground area according to an embodiment.
FIG. 3 is a flowchart illustrating operations performed in a portable electronic device to determine an active token to be used in a non-ground area according to an embodiment.
FIG. 4 illustrates an example of a user interface (UI) for interaction with a user in connection with determination of an active token.
FIG. 5 is a flowchart illustrating operations performed in a portable electronic device to determine an active token to be used in a non-ground area according to an embodiment.
FIG. 6 illustrates an example of a user interface (UI) for interaction with a user in connection with determination of an active token.
FIG. 7 is a flowchart illustrating operations performed in a portable electronic device to determine an active token to be used in a non-ground area according to an embodiment.
FIG. 8 illustrates an example of a user interface (UI) for interaction with a user in connection with token issuance.
FIG. 9 is a flowchart illustrating operations performed in a portable electronic device to determine an active token to be used in a non-ground area according to an embodiment.
FIG. 10 is a flowchart illustrating operations performed in a portable electronic device to configure an active token and use the same for payment according to an embodiment.
FIGS. 11A, 11B, 11C, and 11D illustrate examples of a user interface (UI) for interaction with a user in connection with use of a token in a non-ground area.
FIG. 12 is a flowchart illustrating operations performed in a portable electronic device to configure an active token and use the same for payment according to an embodiment.

Hereinafter, embodiments of the disclosure will be described in detail with reference to the accompanying drawings so that those skilled in the art may easily practice the same. However, the disclosure may be implemented in various different forms and is not limited to the embodiments described herein. In describing the drawings, the same or similar components may be denoted by the same or similar reference numerals. In addition, in the drawings and the related description, descriptions of well-known functions and configurations may be omitted for clarity and brevity.

### [Mode for the Invention]

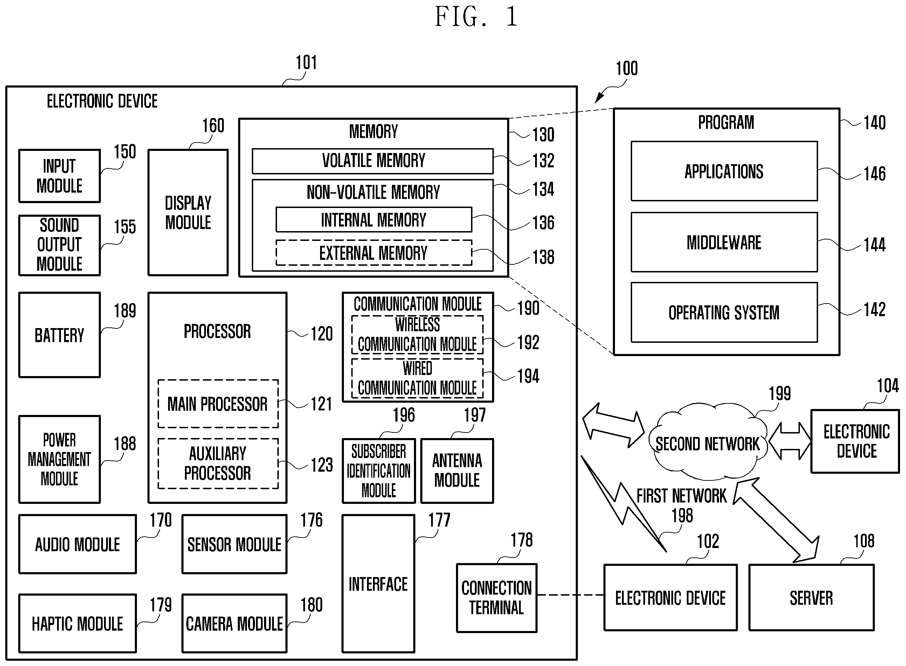

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

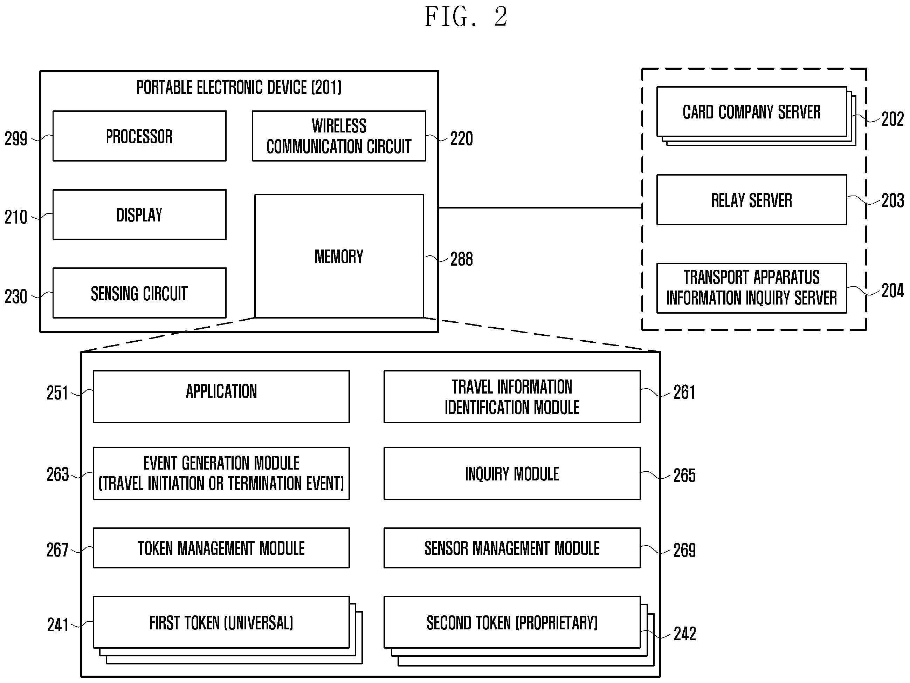

FIG. 2 is a block diagram of a portable electronic device 201 configured to support a transaction performed in a non-ground area according to an embodiment. Referring to FIG. 2, the electronic device 201 (e.g., the electronic device 101 in FIG. 1) may include a touch-sensitive display 210, a wireless communication circuit 220, a sensing circuit 230, a memory 288, and a processor 299. The components of the electronic device 201 may be operatively, functionally, and/or electrically connected to each other. The display 210, the wireless communication circuit 220, the sensing circuit 230, the memory 288, and the processor 299 may be implemented substantially identically to the display module 160, the wireless communication module 192, the sensor module 176, the memory 130, and the processor 120 of FIG. 1, respectively, and may perform the same functions. The memory 288 may store a program for supporting a transaction and tokens 241 and 242. For example, the memory 288 may include a first memory which is volatile, and a second memory which is nonvolatile. The program (e.g., the program 140 in FIG. 1) may be stored as instructions in the second memory, loaded into the first memory, and executed by the processor 299. The program, when executed by the processor 299, may cause the electronic device 201 to perform given operations (e.g., an online transaction using tokens 241 and 242 in the non-ground area). According to an embodiment, the program may include an application 250, a travel information identification module 261, an event generation module 263, an inquiry module 265, a token management module 267, and a sensor management module 269. Processes residing in a first memory (e.g., RAM) and being executed or waiting may be classified, for example, as a background process and a foreground process (or top-layer process, non-background process). For example, a process (e.g., application 230) corresponding to an execution screen of a program which is displayed on the display 210 and is capable of performing interaction with a user may be classified as a foreground process. A process (e.g., modules 261, 263, 265, 267, and 269) that is not displayed on the display 210 may be classified as a background process.

According to an embodiment, the application 250 (e.g., the application 146 in FIG. 1) may include a first application (in other words, a travel application) (e.g., a ticket reservation application, a hotel reservation application, a messenger, or a calendar/schedule application) that provides travel-related information (hereinafter, travel information) to another program (e.g., the travel information identification module 261). The application 250 may include a second application (in other words, a payment application) (e.g., a wallet) that supports a mobile payment service using payment information (e.g., a card number or a token corresponding thereto).

According to an embodiment, as an application 251 is executed in the portable electronic device 201, the travel information identification module 261 may identify travel information from data received from an external device through the wireless communication circuit 220 and stored in the memory 288. For example, travel information identifiable from data stored in the memory 288 may include identification information of a transport apparatus (e.g., a cruise name, an aircraft name, or an aircraft number), information indicating a departure country of the transport apparatus, information indicating an arrival country of the transport apparatus, information indicating a company operating the transport apparatus, information indicating a nationality of the operating company, information indicating a planned embarkation time of a passenger (user) on the transport apparatus, information indicating a planned departure time of the transport apparatus from a departure location, information indicating a planned arrival time of the transport apparatus at a destination, or information indicating a planned disembarkation time of the passenger from the transport apparatus.

According to an embodiment, the travel information identification module 261 may receive data from the external device through the wireless communication circuit 220 and identify travel information from the received data. For example, the wireless communication circuit 220 may include a Wi-Fi communication circuit. A first external device (e.g., a Wi-Fi wireless router) may transmit a response signal in response to a scan signal. The travel information identification module 261 may identify network information from the response signal. The network information may include travel information. For example, the travel information identification module 261 may identify, together with identification information of the first external device, identification information (e.g., an aircraft name or an aircraft number) of the transport apparatus in which the first external device is located, from the response signal. As another example, the travel information identification module 261 may transmit the identification information of the transport apparatus obtained from the first external device to a second external device (e.g., a transport apparatus information inquiry server 204) through the wireless communication circuit 220 (e.g., a cellular communication circuit or a Wi-Fi communication circuit), thereby requesting additional travel information from the second external device. The travel information identification module 261 may receive a response message from the second external device through the wireless communication circuit 220 in response to the request, and identify travel information (e.g., departure time, embarkation time, or arrival time) from the response message.

According to an embodiment, the travel information identification module 261 may identify information (e.g., an airline code and a unique identification number assigned to an aircraft of the airline) indicating that the first external device is associated with the transport apparatus that moves in the non-ground area from the identification information of the first external device in the response signal. For example, when the airline is Korean Air, the travel information identification module 261 may identify an airline code of "KE" and the corresponding aircraft number from the identification information of the first external device. The travel information identification module 261 may transmit the identification information of the first external device to the second external device (e.g., the transport apparatus information inquiry server 204) through the wireless communication circuit 220 (e.g., the cellular communication circuit or the Wi-Fi communication circuit), thereby requesting the second external device for travel information. The travel information identification module 261 may receive a response message from the second external device through the wireless communication circuit 220 in response to the request, and identify travel information (e.g., a departure time, an embarkation time, or an arrival time) from the response message.

According to an embodiment, the event generation module 263 may generate a travel initiation event (or a first event) based on the travel information identified by the travel information identification module 261.

For example, the event generation module 263 may identify information indicating a planned time for embarking on a transport apparatus (or a planned time for the transport apparatus to depart from the departure place) in the travel information, and may generate the travel initiation event, based on the identified time information. For example, the event generation module 263 may generate the travel initiation event at the embarkation time. For example, the event generation module 263 may generate the travel initiation event a given time (e.g., several minutes to several tens of minutes) before the embarkation time (or departure time).

As another example, after the transport apparatus information (e.g., an aircraft name) is identified by the travel information identification module 261, the event generation module 263 may generate the travel initiation event, based on a user input to the portable electronic device 201 through the display 210. For example, after the transport apparatus information is identified from the data obtained by the travel information identification module 261, when a user input for activating an airplane mode is input to the portable electronic device 201 through the display 210, the event generation module 263 may generate the travel initiation event.

According to an embodiment, the portable electronic device 210 may be connected to an external device through the Wi-Fi communication circuit. For example, the event generation module 263 may identify that the external device is a Wi-Fi wireless router located in the transport apparatus, from identification information of the external device received through the Wi-Fi communication circuit. The portable electronic device 210 may be connected to a long-range wireless communication network (e.g., satellite communication network) through the router. The event generation module 263 may generate the travel initiation event, based on identifying that the external device wirelessly connected to the portable electronic device 210 is identified as a Wi-Fi wireless router located in the transport apparatus.

According to an embodiment, the wireless communication circuit 220 may include a satellite communication circuit for supporting communication of the portable electronic device 201 with a satellite communication network. The event generation module 263 may generate the travel initiation event, based on the portable electronic device 210 being connected to the satellite communication network through the satellite communication circuit.

According to an embodiment, the event generation module 263 may generate the travel initiation event, based on a user input (airplane mode activation) being input to the portable electronic device 201.

According to an embodiment, the event generation module 263 may generate a travel termination event (or a second event) based on the travel information identified by the travel information identification module 261. For example, the event generation module 263 may identify information indicating a planned time for disembarking from the transport apparatus (or a planned time for the transport apparatus to arrive at the destination) from the travel information, and may generate the travel termination event, based on the identified time information. For example, the event generation module 263 may generate the travel termination event at a disembarkation time (or an arrival time). The event generation module 263 may generate the travel termination event a given time (e.g., several minutes to several tens of minutes) before the disembarkation time (or arrival time).

According to an embodiment, the event generation module 263 may generate the travel termination event, based on a user input for deactivating the airplane mode, which is input to the portable electronic device 201 through the display 210 after the travel initiation event.

According to an embodiment, the event generation module 263 may generate the travel termination event, based on wireless connection with the satellite communication network or the first external device being disconnected, after the travel initiation event.

According to an embodiment, the inquiry module 265 may inquire of an external device (e.g., a relay server 203 or a corresponding card company server among card company servers 202) whether the operator of the transport apparatus and a card company that issued a card registered in the portable electronic device 201 are in an affiliation relationship, based on the occurrence of the travel initiation event.

For example, the inquiry module 265 may obtain, from the memory 288, identification information (e.g., a company name and/or a number indicating the card company in a card number) of the card company that issued the card(s) registered in the portable electronic device 201. The inquiry module 265 may transmit, to the external device (e.g., the relay server 203 or the corresponding card company server among card company servers 202) through the wireless communication circuit 220, an affiliation inquiry request message including the identification information of the card company and the identification information of the transport apparatus. The inquiry module 265 may receive, from the external device through the wireless communication circuit 220, an affiliation inquiry response message including affiliation information indicating whether affiliation exists. When a plurality of cards is subject to inquiry, the affiliation inquiry response message may include information indicating whether each card has an affiliation relationship.

As another example, the inquiry module 265 may transmit, to the external device (e.g., the relay server 203 or the corresponding card company server among the card company servers 202), a card inquiry request message requesting to identify whether the card(s) registered in the portable electronic device 201 is/are valid (e.g., a card available for payment, a card with an exceeded limit, or an invalid card that is suspended). The card inquiry request message may include the identification information of the card company and the identification information of the registered card (e.g., a card number and/or credit information (e.g., a name or birth date) of the user who owns the registered card). The inquiry module 265 may receive a card inquiry response message including information indicating whether each card is valid, from the external device through the wireless communication circuit 220. The inquiry module 265 may identify a valid card(s) from the card inquiry response message from the registered cards. The inquiry module 265 may transmit the affiliation inquiry request message including the identification information of the card company that that issued the card(s) identified as being valid and the identification information of the transport apparatus to the external device (e.g., the relay server 203 or the corresponding card company server among the card company servers 202) through the wireless communication circuit 220. The inquiry module 265 may receive the affiliation inquiry response message including affiliation information indicating whether affiliation exists, from the external device through the wireless communication circuit 220. When a plurality of cards is subject to inquiry, the affiliation inquiry response message may include information as to whether each card has an affiliation relationship.

According to an embodiment, the token management module 267 may set or configure (in other words, determine) a token (hereinafter, an active token) to be used for payment, among first tokens (or universal tokens) 241 and second tokens (or dedicated tokens) 242, based on the affiliation information identified through the inquiry module 265. The token management module 267 may configure the other tokens excluding the active token as inactive tokens. For example, the first token may include a so-called EMV token according to a standard set by Euro Pay, Master Card, and Visa. For example, the second token may include a token according to a standard independently established by Samsung Pay, a token according to a standard independently established by Union Pay, a token according to a standard independently established by JCB, or a token according to a standard independently established by Maestro.

For example, when the card company is identified as having an affiliation relationship with the operating company, based on the affiliation information, the token management module 267 may configure a dedicated token of the corresponding card among the second tokens 242 as an active token and configure a universal token of the corresponding card among the first tokens 241 as an inactive token.

As another example, when the card company is identified as not having the affiliation relationship with the operating company, based on the affiliation information, the token management module 267 may configure the universal token of the corresponding card among the first tokens 241 as an active token and configure the dedicated token of the corresponding card among the second tokens 242 as an inactive token.

According to an embodiment, the token management module 267 may configure an active token among the first tokens 241 and the second tokens 242, based on occurrence of a travel termination event in the event generation module 263. For example, when the travel termination event occurs while the dedicated token is configured as the active token, the token management module 267 may change the active token of the card to the universal token. As another example, when the travel termination event occurs while the dedicated token is configured as the active token, the token management module 267 may terminate the activation of the token.

According to an embodiment, the token management module 267 may transmit a token issuance request message, requesting to issue a dedicated token (e.g., a one-time token), to the external device (e.g., the relay server 203 or the corresponding card company server among the card company servers 202), based on a travel initiation event being generated by the event generation module 263. The token issuance request message may include the identification information of the corresponding card (e.g., a card number and/or credit information (e.g., a name and birth date) of the user who owns the card). The token management module 267 may receive a token issuance response message including the dedicated token from the external device through the wireless communication circuit 220 and store the same in the memory 288. The token management module 267 may configure the received dedicated token as an active token.

According to an embodiment, the sensor management module 269 may identify that the transport apparatus is located in the non-ground area where the boundary between countries is geometrically unclear, based on data (e.g., speed, altitude, longitude, or latitude) received from the sensing circuit 230, after the event initiation event is generated by the event generation module 263.

According to an embodiment, the sensor management module 269 may request the token management module 267 to activate a token, based on identifying that the transport apparatus is located in the non-ground area. In response to the request, the token management module 267 may configure the token (e.g., the dedicated token received from the external device via the token issuance response message) as an active token.

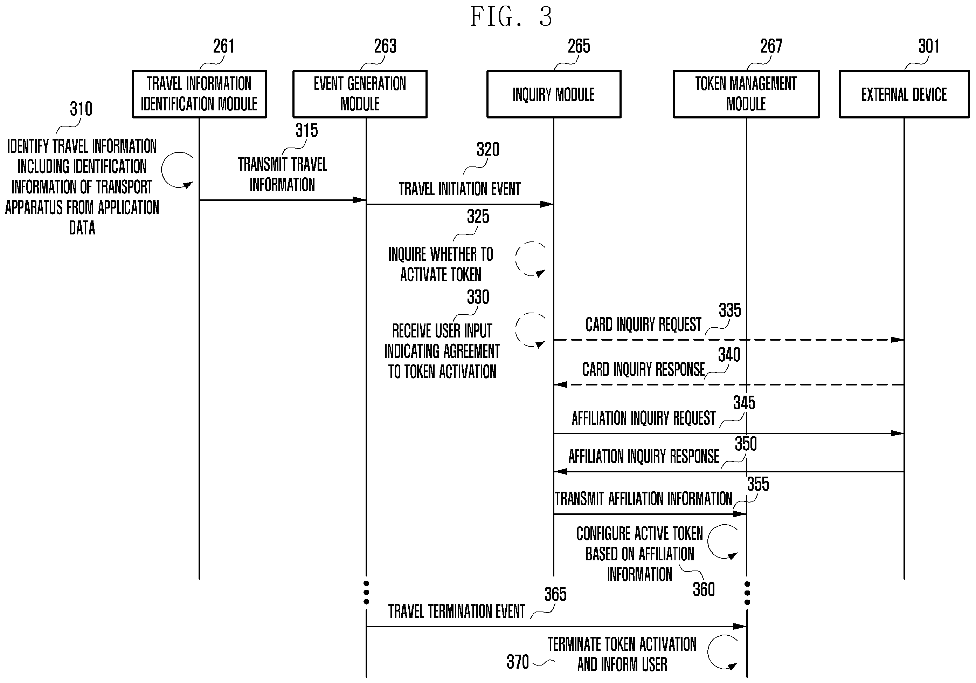

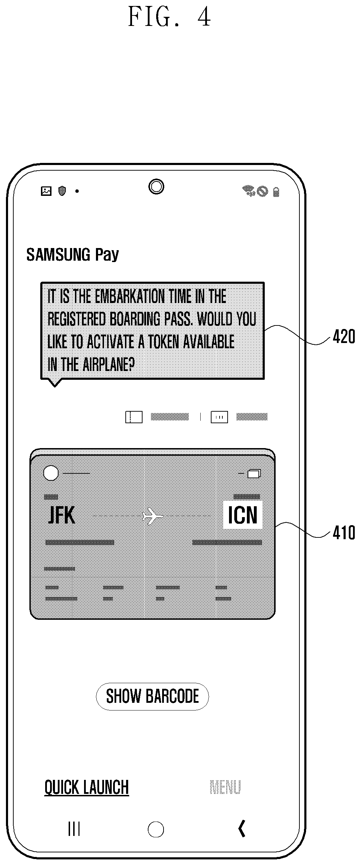

FIG. 3 is a flowchart illustrating operations performed in the portable electronic device 201 to determine an active token to be used in a non-ground area according to an embodiment. FIG. 4 illustrates an example of a user interface (UI) for interaction with a user in connection with determination of an active token.

In operation 310, the travel information identification module 261 may identify travel information including identification information of a transport apparatus from application data stored in the memory 288. For example, the travel information identification module 261 may identify, from the application data, the identification information of the transport apparatus (e.g., a cruise name, an aircraft name, or an aircraft number), information indicating a departure country of the transport apparatus, information indicating an arrival country of the transport apparatus, information indicating a company operating the transport apparatus, information indicating a nationality of the operating company, information indicating a planned embarkation time of a passenger (user) on the transport apparatus, information indicating a planned departure time of the transport apparatus from a departure location, information indicating a planned arrival time of the transport apparatus at an arrival location, and/or information indicating a planned disembarkation time of the passenger from the transport apparatus.

In operation 315, the travel information identification module 261 may transfer the identified travel information to the event generation module 263.

In operation 320, the event generation module 263 may generate a travel initiation event, based on the received travel information. For example, the event generation module 263 may identify an embarkation time in the travel information and generate the travel initiation event at the embarkation time. As another example, the event generation module 263 may identify an embarkation time or a departure time in the travel information, and may generate the travel initiation event a given time before the embarkation time or the departure time (e.g., 10 minutes before the embarkation time).

In operation 325, the inquiry module 265 may inquire of the user whether to activate a token (in other words, whether to use a token activation policy in the non-ground area) in response to occurrence of the travel initiation event. For example, referring to FIG. 4, in response to the occurrence of the travel initiation event, the inquiry module 265 may display a boarding pass 410 on the display 210. In addition, the inquiry module 265 may display a message 420 inquiring whether to activate a token for payment on the transport apparatus (e.g., an aircraft) together with the boarding pass 410. In response to selection of (e.g., a touch on) the message 420, the inquiry module 265 may display a screen for selecting whether to activate the same on the display 210.

In operation 330, the inquiry module 265 may receive a user input indicating that the user agrees to token activation through the display 210, as a user response to the inquiry.

In operation 335, in accordance with the user's agreement to token activation, the inquiry module 265 may transmit a card inquiry request message for requesting to identify whether a card registered in the portable electronic device 201 is valid, to an external device 301 (e.g., the relay server 203 or a corresponding card company server among the card company servers 202) through the wireless communication circuit 220. When the relay server 203 receives the message, the relay server 203 may transfer the card inquiry request message to the corresponding card company server.

In operation 340, the inquiry module 265 may receive a card inquiry response message including information indicating whether each card is valid, from the external device 301 through the wireless communication circuit 220.

In operation 345, the inquiry module 265 may transmit, to the external device 301 through the wireless communication circuit 220, an affiliation inquiry request message including identification information of a card company of the card, registered in the portable electronic device 201 and identified as being valid via the card inquiry response message, and identification information of the transport apparatus.

In operation 350, the inquiry module 265 may receive an affiliation inquiry response message including affiliation information indicating whether the card company and the operating company of the transport apparatus are in an affiliation relationship, from the external device 301 through the wireless communication circuit 220.

In operation 355, the inquiry module 265 may obtain the affiliation information from the affiliation inquiry response message and transfer the same to the token management module 267.

In operation 360, the token management module 267 may configure an active token, based on the received affiliation information. For example, when the card company and the operating company of the transport apparatus are identified as having an affiliation relationship from the affiliation information, the token management module 267 may configure a second token as an active token among a first token (universal token) and the second token (dedicated token) of the corresponding card company, and configure the first token as an inactive token. As another example, when the card company and the operating company of the transport apparatus operator are identified as not being in the affiliation information, the token management module 267 may configure the first token as an active token among the first token (universal token) and the second token (dedicated token) of the corresponding card company, and configure the second token as an inactive token.

After the active token configuration based on the affiliation information is completed, the token management module 267 may identify that a travel termination event is generated from the event generation module 263 in operation 365.

In operation 370, the token management module 267 may terminate token activation (in other words, terminate use of the token activation policy in the non-ground area), based on the occurrence of the travel termination event. For example, when the second token is configured as an active token, the token management module 267 may change the active token to the first token so that payment is enabled abroad. In addition, the token management module 267 may notify the user of the termination of token activation through the display 210.

According to an embodiment, the token activation policy may be preconfigured to be used in the non-ground area. In this case, when the use of the token activation policy is a default value, the inquiry module 265 may omit operations 325 and 330 and proceed with operation 335, based on the occurrence of the travel initiation event.

According to an embodiment, operations 335 and 340 may be omitted. For example, the inquiry module 265 may transmit the affiliation inquiry request message including the identification information of the card company of the card registered in the portable electronic device 201 and the identification information of the transport apparatus to the external device 301 through the wireless communication circuit 220, in accordance with the user's consent to token activation (or in accordance with the occurrence of the travel initiation event).

According to an embodiment, operation 335 may be performed in parallel with operation 345 or performed after operation 350. For example, the token management module 267 may request the external device 301 to perform a card inquiry and an affiliation inquiry, and may receive a response to the request from the external device 301. When it is identified, from a card inquiry response, that the corresponding card is a valid card with an exceeded limit or a suspended card, the token management module 267 may notify the user of the fact through the display 210 and terminate the token activation. As another example, the token management module 267 may request the external device 301 to perform a card inquiry for the corresponding card after receiving the affiliation inquiry response message, and may receive a response therefor from the external device 301. When the token management module 267 identifies that the corresponding card is a valid card with an exceeded limit or a suspended card from the response, the token management module 267 may inform the user of the fact through the display 210 and terminate the token activation.

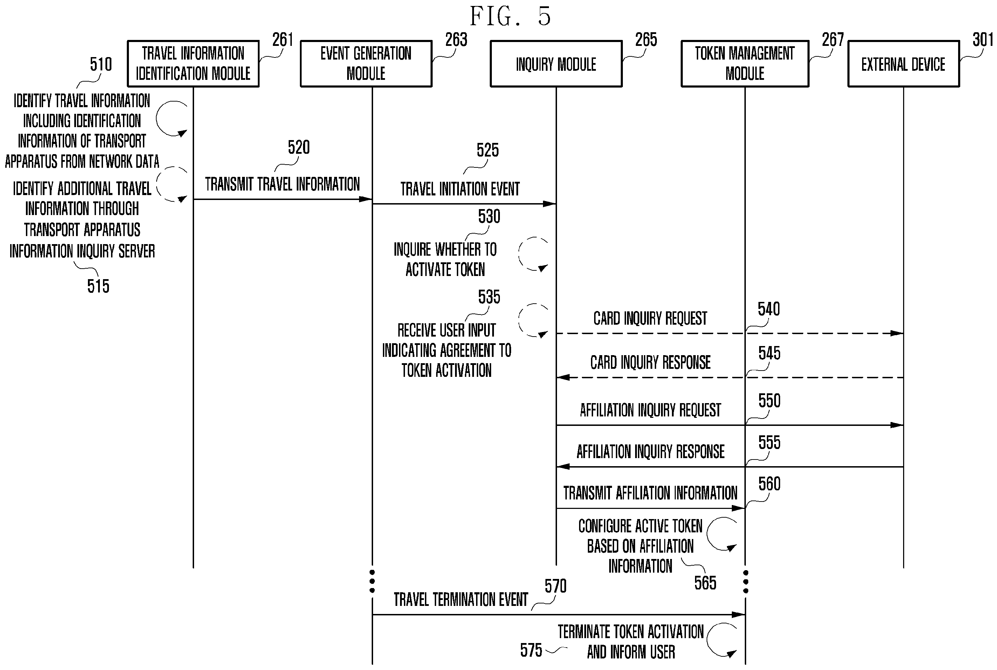

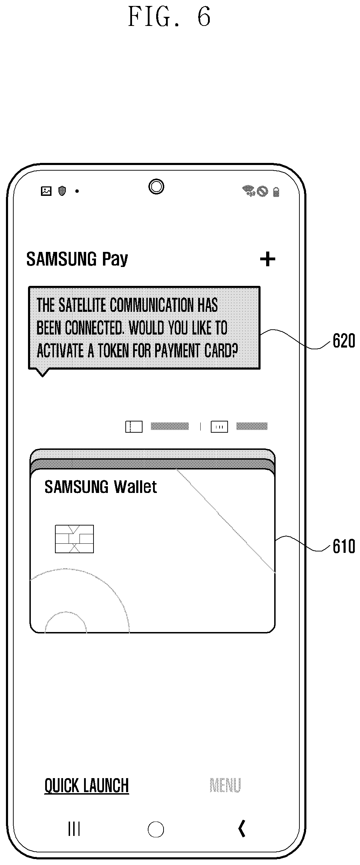

FIG. 5 is a flowchart illustrating operations performed in the portable electronic device 201 to determine an active token to be used in a non-ground area according to an embodiment. FIG. 6 illustrates an example of a user interface (UI) for interaction with a user in connection with determination of an active token. Descriptions overlapping with those of FIG. 3 will be briefly described or omitted.

In operation 510, the travel information identification module 261 may identify travel information including identification information of a transport apparatus from network data received from an external device through the wireless communication circuit 220. For example, the travel information identification module 261 may identify the identification information (e.g., an aircraft name or an aircraft number) of the transport apparatus from data received from the external device (e.g., a Wi-Fi wireless router) through a Wi-Fi communication circuit of the wireless communication circuit 220.

In operation 515, the travel information identification module 261 may identify additional travel information through the transport apparatus information inquiry server 204, based on identifying the identification information of the transport apparatus from the network data. For example, the travel information identification module 261 may transmit an inquiry request message including the identification information of the transport apparatus to the transport apparatus information inquiry server 204 through the wireless communication circuit 220. The travel information identification module 261 may receive an inquiry response message including a planned departure time of the transport apparatus from a departure location (and/or a planned embarkation time of a passenger on the transport apparatus) and/or a planned arrival time of the transport apparatus at a destination, from the transport apparatus information inquiry server 204 through the wireless communication circuit 220.

In operation 520, the travel information identification module 261 may transfer the identified travel information to the event generation module 263.

In operation 525, the event generation module 263 may generate a travel initiation event, based on the received travel information. For example, the event generation module 263 may identify the embarkation time from the travel information and generate the travel initiation event at the embarkation time. As another example, the event generation module 263 may identify the embarkation time or the departure time from the travel information, and generate the travel initiation event a given time before the embarkation time or the departure time (e.g., 10 minutes before the boarding time). As another example, in response to the identification information of the transport apparatus being identified from the travel information and a user input for activating an airplane mode, which is input to the portable electronic device 201 through the display 210, the event generation module 263 may generate the travel initiation event. According to this example, operation 515 may be omitted.

In operation 530, in response to occurrence of the travel initiation event, the inquiry module 265 may inquire of the user whether to activate a token. For example, referring to FIG. 6, in response to the occurrence of the travel initiation event, the inquiry module 265 may display a boarding pass 610 on the display 210. In addition, for example, the inquiry module 265 may display a message 620 inquiring whether to activate a token for payment in the transport apparatus (e.g., an aircraft) together with the boarding pass 610. In response to selection of (e.g., touch on) the message 620, the inquiry module 265 may display a screen for selecting whether to activate the same on the display 210.

In operation 535, the inquiry module 265 may receive, through the display 210, a user input indicating agreement to token activation as a user response to the inquiry.

In operation 540, as the user agrees to token activation, the inquiry module 265 may transmit a card inquiry request message that requests to identify whether a card registered in the portable electronic device 201 is valid to the external device 301 (e.g., the relay server 203 or a corresponding card company server among card company servers 202) through the wireless communication circuit 220. When the relay server 203 receives the message, the relay server 203 may transfer the card inquiry request message to the corresponding card company server.

In operation 545, the inquiry module 265 may receive a card inquiry response message including information indicating whether each card is valid, from the external device 301 through the wireless communication circuit 220.

In operation 550, the inquiry module 265 may transmit, to the external device 301 through the wireless communication circuit 220, an affiliation inquiry request message including identification information of the card company of the card, registered in the portable electronic device 201 and identified as being valid via the card inquiry response message, and the identification information of the transport apparatus.

In operation 555, the inquiry module 265 may receive an affiliation inquiry response message including affiliation information indicating whether the card company and the operating company of the transport apparatus are in an affiliation relationship, from the external device 301 through the wireless communication circuit 220.

In operation 560, the inquiry module 265 may obtain the affiliation information from the affiliation inquiry response message, and transfer the same to the token management module 267.

In operation 565, the token management module 267 may configure an active token, based on the received affiliation information.

After the active token configuration based on the affiliation information is completed, the token management module 267 may identify that a travel termination event is generated by the event generation module 263 in operation 570.

In operation 575, the token management module 267 may terminate token activation, based on the occurrence of the travel termination event. For example, when a second token (dedicated token) is configured as an active token, the token management module 267 may change the active token to a first token (universal token) so as to enable payment abroad. In addition, the token management module 267 may inform the user of the termination of the token activation through the display 210.

According to an embodiment, a token activation policy may be preconfigured to be used in the non-ground area. When the use of the token activation policy is a default value, the inquiry module 265 may omit operations 530 and 535 and proceed with operation 540, based on the occurrence of the travel initiation event.

According to an embodiment, operations 540 and 545 may be omitted. For example, the inquiry module 265 may transmit, to the external device 301 through the wireless communication circuit 220, the affiliation inquiry request message including the identification information of the card company of the card registered in the portable electronic device 201 and the identification information of the transport apparatus, in accordance with the user's agreement to token activation (or in accordance with the occurrence of the travel initiation event).

According to an embodiment, operation 540 may be performed in parallel with operation 550 or performed after operation 555. For example, the token management module 267 may request the external device 301 to perform a card inquiry and an affiliation inquiry and receive a response therefor from the external device 301. When the token management module 267 identifies, from the card inquiry response, that the corresponding card is a valid card with an exceeded limit or a suspended card, the token management module 267 may inform the user of the fact through the display 210 and terminate token activation. As another example, the token management module 267 may request the external device 301 to perform a card inquiry for the corresponding card after receiving the affiliation inquiry response message, and may receive a response therefor from the external device 301. When the token management module 267 identifies that the corresponding card is a valid card with an exceeded limit or a suspended card, the token management module 267 may inform the user of the fact through the display 210 and terminate the token activation.

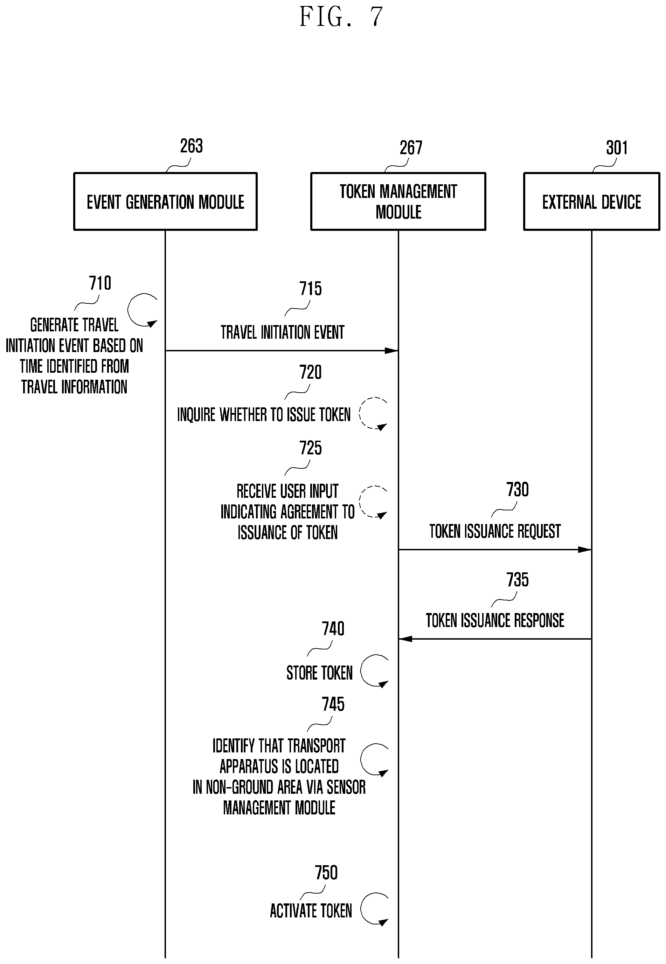

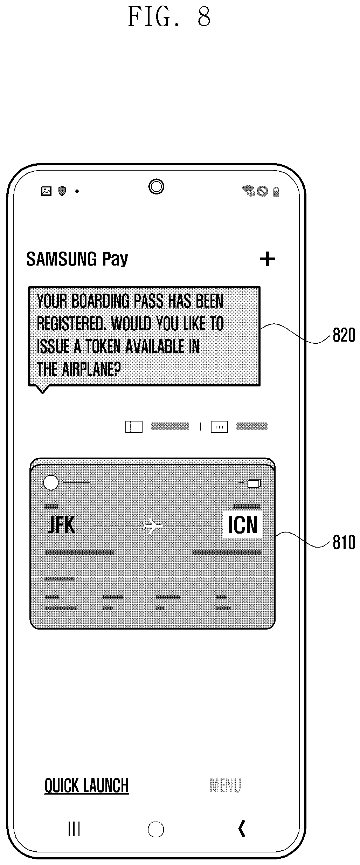

FIG. 7 is a flowchart illustrating operations performed in the portable electronic device 201 to determine an active token to be used in a non-ground area, according to an embodiment. FIG. 8 illustrates an example of a user interface (UI) for interacting with a user in connection with token issuance. Descriptions overlapping with those of FIG. 3 and FIG. 5 will be briefly described or omitted.

In operation 710, the event generation module 263 may generate a travel initiation event, based on a time (e.g., an embarkation time or a departure time) identified from travel information.

In operation 715, the token management module 267 may identify occurrence of the travel initiation event.

In operation 720, the token management module 267 may inquire of the user whether to issue a token for payment in the non-ground area. For example, referring to FIG. 8, in response to the occurrence of the travel initiation event, the token management module 267 may display a boarding pass 810 on the display 210. In addition, the token management module 267 may display a message 820 inquiring whether to issue a token for payment in a transport apparatus (e.g., an aircraft) together with the boarding pass 810. The token management module 267 may display, on the display 210, a screen for selecting whether to issue a token in response to selection of (touch on) the message 820.

In operation 725, the inquiry module 265 may receive, through the display 210, a user input indicating agreement to the issuance of a token, as a user response to the inquiry.

In operation 730, in accordance with the user's consent to token issuance, the token management module 267 may transmit a token issuance request message that requests to issue a token (e.g., a one-time token) to the external device 301 (e.g., the relay server 203 or a corresponding card company server among the card company servers 202). The token issuance request message may include identification information of a corresponding card (e.g., a card number and/or credit information (e.g., a name or birth date) of the user who owns the corresponding card).

In operation 735, the token management module 267 may receive a token issuance response message including an issued token from the external device 301 through the wireless communication circuit 220.

In operation 740, the token management module 267 may obtain the token from the token issuance response message and store the same in the memory 288.

In operation 745, the token management module 267 may identify that the transport apparatus is located in the non-ground area through the sensor management module 269.

In operation 750, the token management module 267 may configure the issued token as an active token, based on identifying that the transport apparatus is located in the non-ground area.

According to an embodiment, a token activation policy may be preconfigured to be used in the non-ground area. When the use of the token activation policy is a default value, as described above, the token management module 267 may omit operations 720 and 725 and proceed with operation 730, based on the occurrence of the travel initiation event.

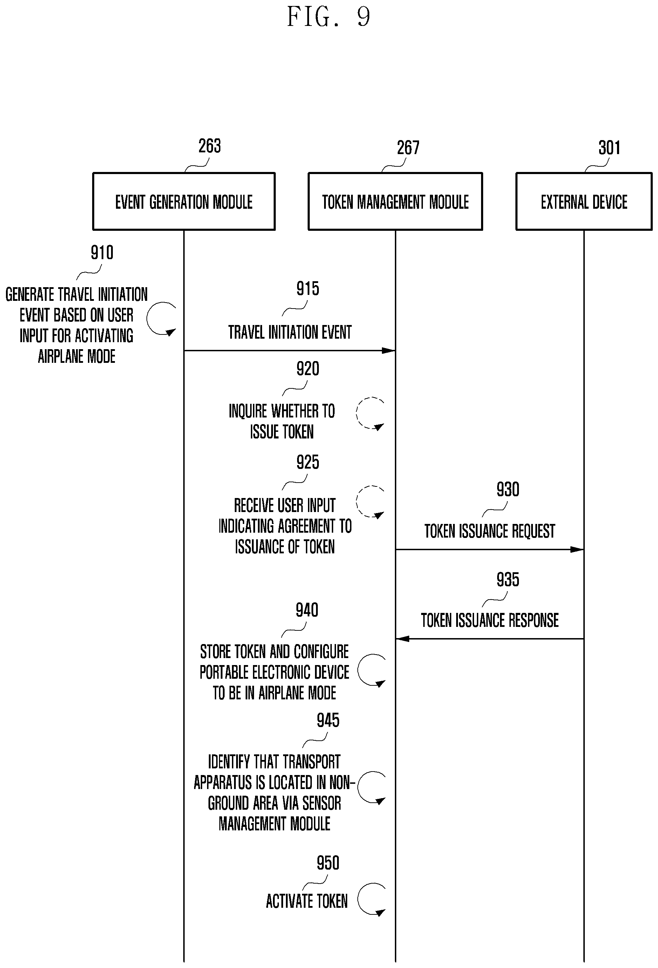

FIG. 9 is a flowchart illustrating operations performed in the portable electronic device 201 to determine an active token to be used in a non-ground area according to an embodiment. Descriptions overlapping with those of FIG. 7 will be briefly described or omitted.

In operation 910, the event generation module 263 may generate a travel initiation event, based on a user input for activating an airplane mode, which is input to the portable electronic device 201. According to an embodiment, the event generation module 263 may generate the travel initiation event, further based on identifying identification information (e.g., an aircraft name or an aircraft number) of a transport apparatus from network data received from an external device through the wireless communication circuit 220.

In operation 915, the token management module 267 may identify occurrence of the travel initiation event.

In operation 920, the token management module 267 may inquire of a user whether to issue a token for payment in the non-ground area.

In operation 925, the inquiry module 265 may receive, through the display 210, a user input indicating agreement to token issuance as a user response to the inquiry.

In operation 930, the token management module 267 may transmit a token issuance request message that requests to issue a token (e.g., a one-time token) to the external device 301 (e.g., the relay server 203 or a corresponding card company server among card company servers 202), in accordance with the user's agreement to token issuance. The token issuance request message may include identification information of a corresponding card (e.g., a card number and/or credit information (e.g., a name or birth date) of the user who owns the corresponding card).

In operation 935, the token management module 267 may receive a token issuance response message including an issued token from the external device through the wireless communication circuit 220.

In operation 940, the token management module 267 may obtain the token from the token issuance response message and store the token in the memory 288. In addition, the token management module 267 may configure the portable electronic device 201 to be in an airplane mode so that long-range wireless communication (e.g., cellular communication) is deactivated in the portable electronic device 201.

In operation 945, the token management module 267 may identify that the transport apparatus is located in the non-ground area through the sensor management module 269.

In operation 950, the token management module 267 may configure the issued token as an active token, based on identifying that the transport apparatus is located in the non-ground area.

According to an embodiment, a token activation policy may be preconfigured so as to be used in the non-ground area. In this case, when the use of the token activation policy is a default value, the token management module 267 may omit operations 920 and 925 and proceed with operation 930, based on the occurrence of the travel initiation event.

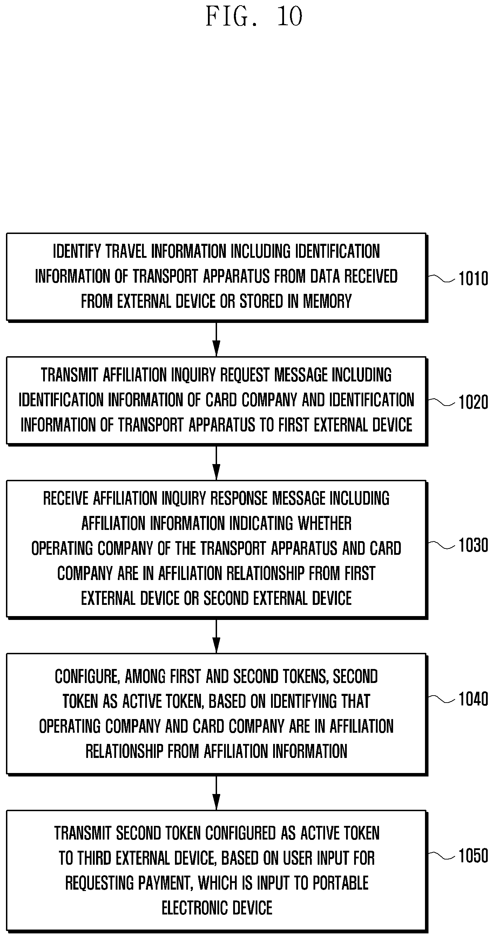

FIG. 10 is a flowchart illustrating operations performed in the portable electronic device 201 to configure an active token and use the same for payment according to an embodiment. When instructions (e.g., the modules 261, 263, 265, 267, and 269 in FIG. 2) stored in the memory 288 are executed by the processor 299, the operations in FIG. 10 may be performed by the portable electronic device 201.

In operation 1010, the portable electronic device 201 may identify travel information including identification information (e.g., an aircraft name or an aircraft number) of a transport apparatus that moves between countries in a non-ground area, from data (e.g., above-described application data and/or network data) received from an external device through the wireless communication circuit 220 or from data (e.g., travel-related user input to the portable electronic device 201) stored in the memory 288. Here, the external device may be another electronic device (e.g., a server, a smartphone, a tablet, or a laptop) that exchanges messages with the portable electronic device 201. Alternatively, for example, the external device may be a Wi-Fi wireless router recognized through a Wi-Fi communication circuit.

In operation 1020, based on identifying the travel information from the data, the portable electronic device 201 may transmit an affiliation inquiry request message including identification information of a card company that issued a card registered in the portable electronic device 201 and identification information of the transport apparatus, to a first external device (e.g., the relay server 203 or a corresponding card company server among the card company servers 202) via the wireless communication circuit 220.

According to an embodiment, the portable electronic device 201 may transmit the affiliation inquiry request message to the first external device, based on identifying, from the travel information, time information indicating an embarkation time or a departure time. For example, the portable electronic device 201 may transmit the affiliation inquiry request message at the embarkation time. As another example, the portable electronic device 201 may transmit the affiliation inquiry request message a given time before the embarkation time (or the departure time) (e.g., 10 minutes before the embarkation time).

According to an embodiment, the portable electronic device 201 may transmit the affiliation inquiry request message to the first external device, further based on a user input for activating an airplane mode, which input to the portable electronic device 201.

According to an embodiment, the portable electronic device 201 may inquire of a user whether to activate a token, based on identifying the travel information from the data. The portable electronic device 201 may transmit the affiliation inquiry request message to the first external device, based on the user's agreement to token activation as a response to the inquiry.

According to an embodiment, the portable electronic device 201 may transmit a card inquiry request message to the first external device to request to identify whether a card registered in the portable electronic device 201 is valid. The portable electronic device 201 may receive a card inquiry response message from the first external device. When it is identified, from the card inquiry response message, that the card is valid, the portable electronic device 201 may transmit the affiliation inquiry request message to the first external device.

According to an embodiment, the portable electronic device 201 may transmit, to the first external device, a token issuance request message requesting to issue a second token (dedicated token) based on identifying the travel information from the data. The portable electronic device 201 may receive a token issuance response message including the second token (e.g., a one-time token) from the first external device and store the second token in the memory 288.

In operation 1030, in response to transmission of the affiliation inquiry request message, the portable electronic device 201 may receive an affiliation inquiry response message including affiliation information indicating whether an operating company of the transport apparatus and a card company are in an affiliation relationship from the first external device (e.g., relay server 203) or a second external device (e.g., a corresponding card company server) other than the first external device through the wireless communication circuit 220.

In operation 1040, based on identifying, from the affiliation information, that the operating company and the card company are in the affiliation relationship, the portable electronic device 201 may configure the second token as an active token for payment among the first token (universal token) and the second token (dedicated token). According to an embodiment, when it is identified, from the affiliation information, that the operating company and the card company are not in the affiliation relationship, the portable electronic device 201 may configure the first token as an active token and deactivate the second token.

According to an embodiment, the portable electronic device 201 may identify that the portable electronic device 201 is located in the non-ground area through data received from the sensing circuit 230. The portable electronic device 201 may configure the second token as an active token, further based on identifying that the portable electronic device 201 is in the non-ground area.

In operation 1050, the portable electronic device 201 may transmit the second token configured as an active token to a third external device (e.g., a POS terminal) through the wireless communication circuit 220 (e.g., a near field communication (NFC) communication circuit), based on a user input for requesting payment, which is input to the portable electronic device 201.

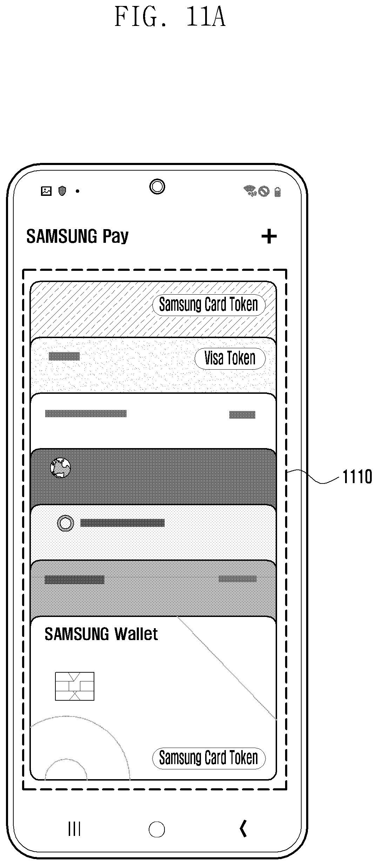

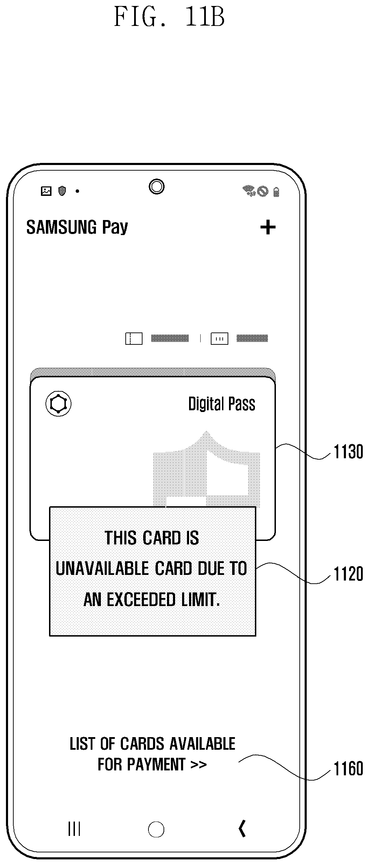

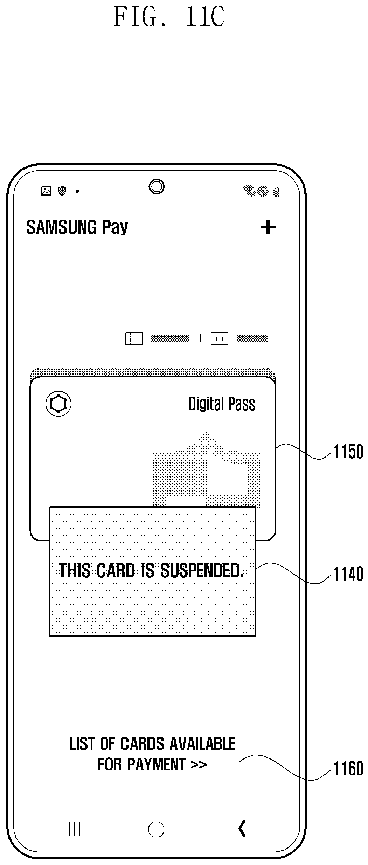

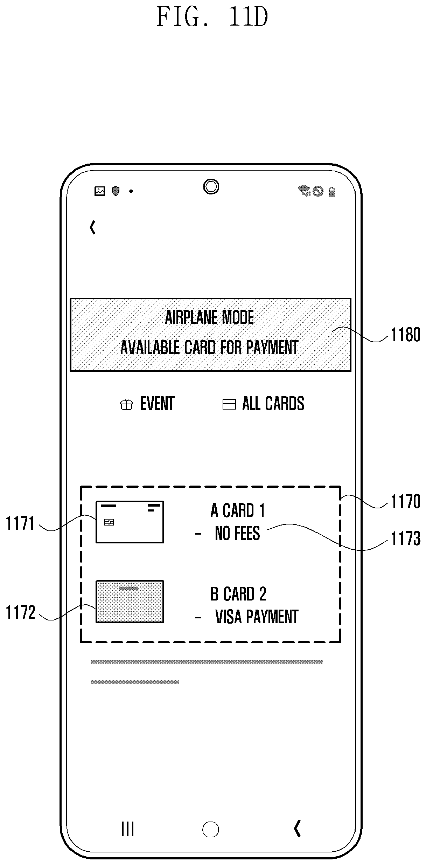

FIGS. 11A, 11B, 11C, and 11D illustrate examples of a user interface (UI) for interaction with a user in connection with use of a token in a non-ground area. The operations described below may be performed by the portable electronic device 201 when instructions stored in the memory 288 are executed by the processor 299.

In an embodiment, the portable electronic device 201 may perform an operation of displaying a list of cards registered in the portable electronic device 201 on the display 210. For example, referring to FIG. 11A, the portable electronic device 201 may display a card list 1110 including card images corresponding to registered cards on the display 210.

According to an embodiment, the portable electronic device 201 may display, on the display 210, a card image corresponding to a card selected by a user among the registered cards. For example, the portable electronic device 201 may display information associated with validity of the correspond card together with the card image. For example, referring to FIG. 11B, the portable electronic device 201 may display information 1120 indicating that the card has exceeded a limit, obtained as a card inquiry result from to an external device (e.g., the external device 301), together with a corresponding card image 1130. As another example, referring to FIG. 11C, the portable electronic device 201 may display information 1140 indicating that the card is suspended, obtained as a card inquiry result from an external device (e.g., external device 301), together with a corresponding card image 1150.

According to an embodiment, the portable electronic device 201 may display a list of cards available for payment among the registered cards on the display 210. According to an embodiment, the portable electronic device 201 may display, on the display 210, a list of cards corresponding to an active token based on affiliation information. For example, referring to FIGS. 11B and 11C, the portable electronic device 201 may display a menu 1160 for displaying the list of cards available for payment together with the card image 1130 or 1140 corresponding to an unavailable card. Referring to FIG. 11D, when the menu 1160 is selected (e.g., touched) by the user, the portable electronic device 201 may display a list 1170 of cards available for payment. For example, the portable electronic device 201 may display information 1180 indicating that a corresponding card in the card list 1170 is available for payment in the non-ground area. The portable electronic device 201 may display an image 1171 of a card corresponding to a dedicated token and an image 1172 of a card corresponding to a universal token in the card list 1170. In addition, the portable electronic device 201 may display a benefit when making a payment using the dedicated token, for example, a message of "no fees," together with the corresponding card image 1171. By transmitting a token corresponding to a card selected by the user in the card list 1170 to the external device through the wireless communication circuit 220, the portable electronic device 201 may complete payment using the selected card.

According to an embodiment, the portable electronic device 201 may activate an issued token (e.g., a one-time token) when it is identified that the portable electronic device 201 is located in the non-ground area. The portable electronic device 201 may display a list of cards corresponding to the active token on the display 210.

According to an embodiment, when there is no card available for payment in the non-ground area among the registered cards, the portable electronic device 201 may inform the user that no available card exists. For example, when the menu 1160 (refer to FIGS. 11B and 11C) is selected (e.g., touched) by the user, the portable electronic device 201 may display a message (e.g., a pop-up window) indicating that no card available in the non-ground area exists. A card unavailable in the non-ground area may include, for example, a card that does not supports a universal token and belongs to a card company that is not in an affiliation relationship with the operating company of the transport apparatus.

According to an embodiment, when it is identified that no card available for payment in the non-ground area exists among the registered cards, the portable electronic device 201 may transmit, to a card company server, a message for requesting to recommend a card available in the non-ground area. The portable electronic device 201 may receive a response message including a recommended card list from the card company server. The portable electronic device 201 may obtain the recommended card list from the response message and display the same on the display 210. For example, when the menu 1160 (refer to FIGS. 11B and 11C) is selected (e.g., touched) by the user, the portable electronic device 201 may display the recommended card list.

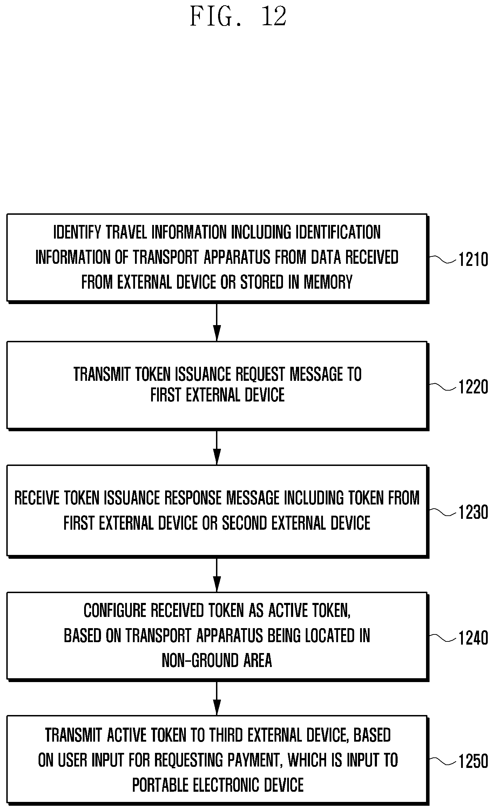

FIG. 12 is a flowchart illustrating operations performed in the portable electronic device 201 to configure an active token and use the same for payment according to an embodiment. When the instructions (e.g., the modules 261, 263, 265, 267, and 269 in FIG. 2) stored in the memory 288 are executed by the processor 299, the operations in FIG. 12 may be performed by the portable electronic device 201.

In operation 1210, the portable electronic device 201 may identify travel information including identification information (e.g., an aircraft name or an aircraft number) of a transport apparatus that moves between countries through a non-ground area, from data (e.g., the above-described application data and/or network data) received from an external device through the wireless communication circuit 220 or data (e.g., a travel-related user input to the portable electronic device 201) stored in the memory 288. Here, the external device may be another electronic device (e.g., a server, a smartphone, a tablet, or a laptop) that exchanges messages with the portable electronic device 201. Alternatively, for example, the external device may be a Wi-Fi wireless router recognized through a Wi-Fi communication circuit.

In operation 1220, the portable electronic device 201 may transmit a message for requesting to issue a token (e.g., a one-time dedicated token) to a first external device (e.g., the relay server 203 or a corresponding card company server among the card company servers 202) through the wireless communication circuit 220, based on identifying the travel information from the data. The token issuance request message may include identification information of a corresponding card (e.g., a card number and/or credit information (e.g., name or birth date) of a user who owns the card).

In operation 1230, the portable electronic device 201 may receive a token issuance response message including an issued token from the first external device (e.g., the relay server 203) or from a second external device (e.g., the corresponding card company server) different from the first external device through the wireless communication circuit 220.

In operation 1240, the portable electronic device 201 may configure the received token as an active token, based on that the transport apparatus is located in the non-ground area.

In operation 1250, the portable electronic device 201 may transmit the active token to a third external device (e.g., a POS terminal) through the wireless communication circuit 220 (e.g., a near field communication (NFC) communication circuit), based on a user input for requesting payment, which is input to the portable electronic device 201.

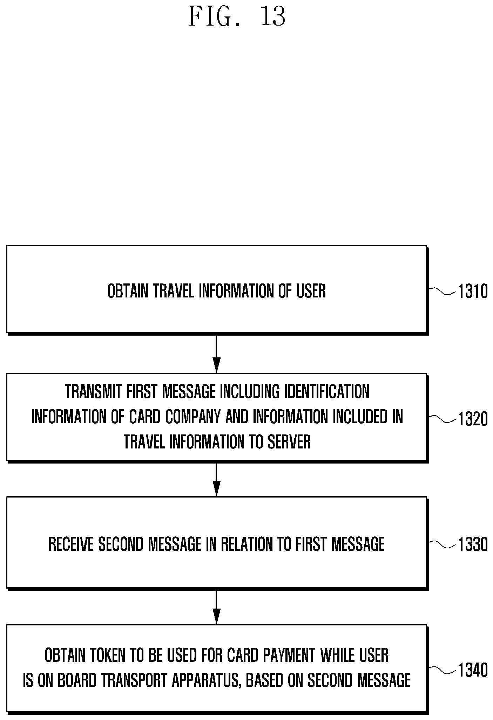

FIG. 13 is a flowchart illustrating operations performed in the portable electronic device 201 to configure an active token and use the same for payment according to an embodiment. When the instructions (e.g., modules 261, 263, 265, 267, and 269 in FIG. 2) stored in the memory 288 are executed by the processor 299, the operations in FIG. 13 may be performed by the portable electronic device 201.

In operation 1310, the portable electronic device 201 may obtain travel information of a user. For example, the portable electronic device 201 may obtain the travel information from data received from an external device through the wireless communication circuit 220 or stored in the memory 288. The portable electronic device 201 may obtain identification information (e.g., an aircraft name or an aircraft number) of a transport apparatus from the obtained travel information.

In operation 1320, the portable electronic device 201 may transmit a first message (e.g., an affiliation inquiry request message) including identification information of a card company that issued a card registered in the portable electronic device 201 and information (e.g., the identification information of the transport apparatus) included in the travel information to a server (e.g., the relay server 203 or the corresponding card company server) through the wireless communication circuit 220, based on the travel information. The identification information and the travel information may be transmitted to the server through different messages. For example, the portable electronic device 201 may transmit one of the two first and, in response to a reply from the server, transmit the other.

In operation 1330, the portable electronic device 201 may receive a second message (e.g., an affiliation inquiry response message) through the wireless communication circuit 220, in relation to the transmission of the first message.

In operation 1340, the portable electronic device 201 may obtain a token to be used for card payment when the user is on board the transport apparatus, based on the second message. According to an embodiment, the portable electronic device 201 may change a usage period of a token (e.g., a second token) previously stored in the memory 288 such that the token may be used for a period during which the user is on board the transport apparatus. For example, the portable electronic device 201 may transmit a message requesting to extend the token's usage period to the server (e.g., the corresponding card company server) through the wireless communication circuit 220. In response to the request, the portable electronic device 201 may receive, through the wireless communication circuit 220, an approval message for the request or a newly-issued token with an extended usage period. According to an embodiment, the portable electronic device 201 may transmit a message for requesting, from the server, a token (e.g., a one-time token) available while the user is on board the transport apparatus, to the server through the wireless communication circuit 220. In response to the request, the portable electronic device 201 may receive a message including a token through the wireless communication circuit 220. According to an embodiment, the portable electronic device 201 may configure the second token among a first token and the second token stored in the memory 288 as a token to be used for card payment while the user is on board the transport apparatus, based on identifying that an operating company of the transport apparatus and the card company are in an affiliation relationship. According to an embodiment, information indicating whether the operating company of the transport apparatus and a card company are in an affiliation relationship (e.g., a table indicating whether an affiliation relationship with the operating company exists for each card company) may be stored in the portable electronic device 201. Accordingly, the portable electronic device 201 may determine whether there is an affiliation relationship, based on the information stored in the portable electronic device 201, without being based on the second message.

According to an embodiment, the portable electronic device 201 may determine whether the user is on board the transport apparatus moving between countries, based on at least one of the travel information and information associated with a location of the portable electronic device 201 identified through the wireless communication circuit 220. For example, the portable electronic device 201 may identify, from the travel information, a planned time for the user to embark on an airplane (or a departure time of the airplane) and a planned time for the airplane to arrive at a destination in a boarding pass. The portable electronic device 201 may determine that the user is on board the transport apparatus, based on the identified time-related information. As another example, the portable electronic device 201 may identify the identification information of the transport apparatus from the wireless communication circuit 220 (e.g., a Wi-Fi communication circuit). The portable electronic device 201 may determine that the user is on board the transport apparatus, based on identifying that the transport apparatus is an airplane moving between countries. As another example, the portable electronic device 201 may identify a geographical location of the portable electronic device 201, based on a signal from a satellite through the wireless communication circuit 220 (e.g., a global positioning system (GPS) communication circuit or a global navigation satellite system (GNSS) communication circuit). The portable electronic device 201 may determine that the user is on board the transport apparatus based on the identified location (e.g., the high seas).

According to an embodiment, the portable electronic device 201 may deactivate the token obtained in operation 1340, based on information associated with the user arriving at the destination (e.g., arrival time or disembarkation time identified from the travel information).

According to an embodiment, the portable electronic device 201 may include the touch-sensitive display 210, the wireless communication circuit 220, the processor 299 connected to the display and the wireless communication circuit, and the memory 288 storing instructions executable by the processor. The instructions, when executed by the processor, may cause the portable electronic device to: identify travel information including identification information of a transport apparatus moving between countries through a non-ground area, from data received from an external device through the wireless communication circuit or from data stored in the memory; transmit an affiliation inquiry request message including identification information of a card company that issued a card registered in the portable electronic device and the identification information of the transport apparatus to a first external device through the wireless communication circuit, based on identifying the travel information from the data; receive an affiliation inquiry response message including affiliation information indicating whether an operating company of the transport apparatus and the card company are in an affiliation relationship from the first external device or a second external device different from the first external device through the wireless communication circuit, in response to transmission of the identification information of the card company and the identification information of the transport apparatus; and configure, among first and second tokens, the second token as an active token for payment, based on identifying that the operating company and the card company are in the affiliation relationship from the affiliation information.

The instructions, when executed by the processor, may cause the portable electronic device to receive, from the display, a user input for requesting payment, and to transmit the second token configured as the active token to a third external device through the wireless communication circuit, based on the reception of the user input. The first token may include a universal token corresponding to the card and complying with a global standard. The second token may include a dedicated token corresponding to the card and complying with a standard independently established by a specific country.

The instructions, when executed by the processor, may cause the portable electronic device to configure the second token as an active token, further based on recognizing that the transport apparatus is located in the non-ground area.

The instructions, when executed by the processor, may cause the portable electronic device to configure the first token as the active token, based on identifying that the operating company and the card company are not in the affiliation relationship from the affiliation information.

The instructions, when executed by the processor, may cause the portable electronic device to identify first time information related to an embarkation time or a departure time from the travel information, and to transmit the affiliation inquiry request message to the first external device, based on the first time information.

The instructions, when executed by the processor, may cause the portable electronic device to identify second time information related to a disembarkation time or an arrival time from the travel information and change the active token to the first token, based on the second time information.

The wireless communication circuit may include a Wi-Fi communication circuit. The instructions, when executed by the processor, may cause the portable electronic device to identify the identification information of the transport apparatus from the data received from the external device through the Wi-Fi communication circuit.

The instructions, when executed by the processor, may cause the portable electronic device to: transmit, to the first external device, a card inquiry request message requesting to inquire whether the card registered in the portable electronic device is available for payment; receive a card inquiry response message including card information indicating whether the registered card is available for payment from the first external device or the second external device; and display an image indicating the card together with the card information.

The instructions, when executed by the processor, may cause the portable electronic device to: transmit a token issuance request message requesting to issue the second token to the first external device through the wireless communication circuit, based on identifying the travel information from the received data; receive a token issuance response message including the second token from the first external device or the second external device; and store the second token in the memory.

The second token received from the first external device may be a one-time token.

The portable electronic device may further include a sensing circuit. The instructions, when executed by the processor, may cause the portable electronic device to configure the second token as an active token, further based on identifying, from the data obtained from the sensing circuit, that the portable electronic device is located in the non-ground area.

According to an embodiment, a method of operating the portable electronic device 201 may include: an operation of identifying travel information including identification information of a transport apparatus moving between countries through a non-ground area, from data received from an external device through a wireless communication circuit of the portable electronic device or from data stored in a memory of the portable electronic device; an operation of transmitting, to a first external device through the wireless communication circuit, an affiliation inquiry request message including identification information of a card company that issued a card registered in the portable electronic device and the identification information of the transport apparatus, based on identifying the travel information from the data; an operation of receiving an affiliation inquiry response message including affiliation information indicating whether an operating company of the transport apparatus and the card company are in an affiliation relationship from the first external device or from a second external device different from the first external device through the wireless communication circuit, in response to transmission of the identification information of the card company and the identification information of the transport apparatus; and an operation of configuring, among a first token and a second token, the second token as an active token for payment, based on identifying that the operating company and the card company are in the affiliation relationship from the affiliation information.

According to an embodiment, the portable electronic device 201 may include the touch-sensitive display 210, the wireless communication circuit 220, the processor 299, and the memory 288 storing instructions. The instructions, when executed by the processor, may cause the portable electronic device to: obtain travel information of a user of the portable electronic device; transmit, based on the travel information, a first message including identification information of a card company that issued a card registered in the portable electronic device and information included in the travel information to a server through the wireless communication circuit; receive a second message in relation to the first message, through the wireless communication circuit; and obtain, based on the second message, a token to be used for card payment while the user is on board a transport apparatus moving between countries. The instructions, when executed by the processor, may cause the portable electronic device to determine whether the user is on board the transport apparatus moving between countries, based on at least one of the travel information and information related to a location of the portable electronic device identified through the wireless communication circuit. For example, the instructions may cause the portable electronic device to identify, from the travel information, a planned time for the user to embark on an airplane (or a departure time of the plane) and a planned time for the airplane to arrive at a destination in a boarding pass. The instructions may cause the portable electronic device to determine that the user is on board the transport apparatus, based on the identified time-related information. As another example, the instructions may cause the portable electronic device to identify identification information of the transport apparatus from the wireless communication circuit (e.g., a Wi-Fi communication circuit). The instructions may cause the portable electronic device to determine that the user is on board the transport apparatus, based on identifying that the transport apparatus is an airplane moving between countries. As another example, the instructions may cause the portable electronic device to identify a geographical location of the portable electronic device, based on a signal from a satellite through the wireless communication circuit (e.g., a global positioning system (GPS) communication circuit or a global navigation satellite system (GNSS) communication circuit). The instructions may cause the portable electronic device to determine that the user is on board the transport apparatus, based on the identified location (e.g., the high seas).

The instructions, when executed by the processor, may cause the portable electronic device to: obtain the travel information from data stored in the memory or received from an external device through the wireless communication circuit, and identify the identification information of the transport apparatus; transmit, to the server, the identified identification information of the transport apparatus via the first message (e.g., an affiliation inquiry request message); identify, from the second message, affiliation information indicating whether an operating company of the transport apparatus and the card company are in an affiliation relationship; and configure, among a first token and a second token, the second token as an active token to be used for the card payment, based on identifying that the operating company and the card company are in the affiliation relationship from the affiliation information.

The instructions, when executed by the processor, may cause the portable electronic device to receive, from the display, a user input for requesting payment, and to transmit the second token to an external device through the wireless communication circuit, based on the reception of the user input. The first token may include a universal token corresponding to the card and complying with a global standard. The second token may include a dedicated token corresponding to the card and complying with a standard independently established by a specific country.

The instructions, when executed by the processor, may cause the portable electronic device to configure the second token as the active token, further based on recognizing that the transport apparatus is located in the non-ground area.

The instructions, when executed by the processor, may cause the portable electronic device to configure the first token as the active token, based on identifying that the operating company and the card company are not in the affiliation relationship from the affiliation information.

The instructions, when executed by the processor, may cause the portable electronic device to identify first time information related to an embarkation time or a departure time in the travel information, transmit the first message to the server, based on the first time information, identify second time information related to a disembarkation time or an arrival time from the travel information, and change the active token to the first token, based on the second time information.

The portable electronic device may further include a sensing circuit. The instructions, when executed by the processor, may cause the portable electronic device to configure the second token as the active token, based on identifying that the portable electronic device is located in the non-ground area from data obtained from the sensing circuit.

The instructions, when executed by the processor, may cause the portable electronic device to obtain the token to be used for card payment by changing a period in which a token stored in the memory is activated.

The instructions, when executed by the processor, may cause the portable electronic device to deactivate the obtained token, based on information related to the user arriving at a destination.

The wireless communication circuit may include a Wi-Fi communication circuit. The instructions, when executed by the processor, may cause the portable electronic device to identify the identification information of the transport apparatus from the data received from the external device through the Wi-Fi communication circuit, and to transmit the identified identification information of the transport apparatus to the server by including the same in the first message.

The instructions, when executed by the processor, may cause the portable electronic device to receive the token to be used for card payment through the wireless communication circuit. The received token may be a one-time token.

According to an embodiment, a method for operating the portable electronic device 201 may include: an operation of obtaining travel information of a user of the portable electronic device; an operation of transmitting, based on the travel information, a first message including identification information of a card company that issued a card registered in the portable electronic device and information included in the travel information to a server through a wireless communication circuit of the portable electronic device; an operation of receiving a second message in relation to the first message, through the wireless communication circuit; an operation of determining whether the user is on board a transport apparatus moving between countries, based on at least one of the travel information and information related to a location of the portable electronic device identified through the wireless communication circuit; and an operation of obtaining, based on the second message, a token to be used for card payment while the user is on board the transport apparatus.

The travel information may be received from an external device through the wireless communication circuit or obtained from data stored in the portable electronic device. The method may further include an operation of identifying the identification information of the transport apparatus from the travel information; an operation of including the identified identification information of the transport apparatus in the first message (e.g., an affiliation inquiry request message); an operation of identifying affiliation information indicating whether an operating company of the transport apparatus and the card company are in an affiliation relationship from the second message; and an operation of configuring, among first and second tokens, the second token as an active token to be used for card payment, based on identifying that the operating company and the card company are in the affiliation relationship from the affiliation information .

The method may further include an operation of transmitting the second token to the external device through the wireless communication circuit, based on a user input for requesting payment, which is input to the portable electronic device. The first token may include a universal token correspond to the card and complying with a global standard. The second token may include a dedicated token corresponding to the card and complying with a standard independently established by a specific country.

The operation of configuring the second token as the active token may be further based on recognizing that the transport apparatus is located in the non-ground area.

The operation of transmitting the first message may include an operation of identifying first time information related to an embarkation time or a departure time from the travel information, and an operation of transmitting the first message to the server, based on the first time information. The method may further include an operation of identifying second time information related to a disembarkation time or an arrival time from the travel information, and an operation of changing the active token to the first token, based on the second time information.

The various embodiments disclosed in the document may be partially combined. For example, when a card with an exceeded limit and a suspended card exist, the corresponding information 1120 and 1140 may be displayed together.

In the above descriptions, the prefixes such as "first," "second," and "third" are only for the purpose of distinguishing components having the same name, and no specific meaning such as importance or order is assigned to the prefixes themselves.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A portable electronic device comprising:
a touch-sensitive display;
a wireless communication circuit;
a processor; and
a memory (288) storing instructions
wherein the instructions, when executed by the processor, cause the portable electronic device to:
obtain travel information of a user of the portable electronic device;
based on the travel information, transmit a first message including identification information of a card company that issued a card registered in the portable electronic device and information included in the travel information to a server through the wireless communication circuit;
receive a second message in relation to the first message through the wireless communication circuit;
based on at least one of the travel information and information on a location of the portable electronic device identified through the wireless communication circuit, determine whether the user is on board a transport apparatus moving between countries; and
based on the second message, obtain a token to be used for card payment while the user is on board the transport apparatus.

2. The portable electronic device of claim 1, wherein the instructions, when executed by the processor, cause the portable electronic device to:
obtain the travel information from data received from an external device through the wireless communication circuit or stored in the memory, and identify identification information of the transport apparatus therefrom; and
include the identified identification information of the transport apparatus in the first message and transmit the first message including the identification information to the server;
identify, from the second message, affiliation information indicating whether an operating company of the transport apparatus and the card company are in an affiliation relationship; and
based on identifying, from the affiliation relationship, that the operating company and the card company are in the affiliation relationship, configure, among a first token and a second token, the second token as an active token to be used for the card payment.

3. The portable electronic device of claim 2, wherein the instructions, when executed by the processor, cause the portable electronic device to:
receive, from the display, a user input requesting payment; and
based on the reception of the user input, transmit the second token to an external device through the wireless communication circuit, and
wherein the first token comprises a universal token corresponding to the card and complying with a global standard, and the second token comprises a dedicated token corresponding to the card and complying with a standard independently established by a specific country.

4. The portable electronic device of claim 2, wherein the instructions, when executed by the processor, cause the portable electronic device to, further based on recognizing that the transport apparatus is located in a non-ground area, configure the second token as the active token.

5. The portable electronic device of claim 2, wherein the instructions, when executed by the processor, cause the portable electronic device to, based on identifying, from the affiliation information, that the operating company and the card company are not in the affiliation relationship, configure the first token as the active token.

6. The portable electronic device of claim 2, wherein the instructions, when executed by the processor, cause the portable electronic device to:
identify first time information regarding an embarkation time or a departure time from the travel information;
based on the first time information, transmit the first message to the server;
identify second time information regarding a disembarkation time or an arrival time from the travel information; and
based on the second time information, change the active token to the first token.

7. The portable electronic device of claim 2, further comprising a sensing circuit,
wherein the instructions, when executed by the processor, cause the portable electronic device to, further based on identifying, from data obtained from the sensing circuit, that the portable electronic device is located in a non-ground area, configure the second token as the active token.

8. The portable electronic device of claim 1, wherein the instructions, when executed by the processor, cause the portable electronic device to obtain the token to be used for card payment by changing a period in which a token stored in the memory is activated.

9. The portable electronic device of claim 1, wherein the instructions, when executed by the processor, cause the portable electronic device to, based on information related to the user's arrival at a destination, deactivate the obtained token.

10. The portable electronic device of claim 1, wherein the wireless communication circuit comprises a Wi-Fi communication circuit, and
wherein the instructions, when executed by the processor, cause the portable electronic device to:
identify identification information of the transport apparatus from data received from an external device through the Wi-Fi communication circuit; and
include the identified identification information of the transport apparatus in the first message and transmit the first message including the identification information to the server.

11. The portable electronic device of claim 1, wherein the instructions, when executed by the processor, cause the portable electronic device to receive the token to be used for card payment through the wireless communication circuit.

12. The portable electronic device of claim 11, wherein the received token is a one-time token.

13. A method of operating a portable electronic device, the method comprising:
obtaining travel information of a user of the portable electronic device;
based on the travel information, transmitting a first message including identification information of a card company that issued a card registered in the portable electronic device and information included in the travel information to a server through a wireless communication circuit of the portable electronic device;
receiving a second message in relation to the first message through the wireless communication circuit;
based on at least one of the travel information and information on a location of the portable electronic device identified through the wireless communication circuit, determining whether the user is on board a transport apparatus moving between countries; and
based on the second message, obtaining a token to be used for card payment while the user is on board the transport apparatus.

14. The method of claim 13, wherein the travel information is obtained from data received from an external device through the wireless communication circuit or stored in the portable electronic device, and
wherein the method further comprises:
identifying identification information of the transport apparatus from the travel information;
including the identified identification information of the transport apparatus in the first message;
identifying, from the second message, affiliation information indicating whether an operating company of the transport apparatus and the card company are in an affiliation relationship; and
based on identifying, from the affiliation information, that the operating company and the card company are in the affiliation relationship, configuring, among a first token and a second token, the second token as an active token to be used for the card payment.

15. The method of claim 14, further comprising, based on that a user input requesting payment is input to the portable electronic device, transmitting the second token to the external device through the wireless communication circuit,
wherein the first token comprises a universal token corresponding to the card and complying with a global standard, and the second token comprises a dedicated token corresponding to the card and complying with a standard independently established by a specific country.
